# EUROPEAN PATENT SPECIFICATION

(11) **EP 3 110 242 B1**
(45) Date of publication and mention of the grant of the patent: **06.05.2020**
(21) Application number: 14883636.4
(22) Date of filing: 26.02.2014
(51) Int. Cl.: A01D 34/73

(54) **CUTTING BLADE**
SCHNEIDKLINGE
LAME DE COUPE

(43) Date of publication of application: 04.01.2017
(73) Proprietor: HUSQVARNA AB, 561 82 Huskvarna (SE)
(72) Inventor: KLACKENSJÖ, Fredrik, S-571 97 Forserum (SE)
(86) International application number: PCT/SE2014/050237
(87) International publication number: WO 2015/130201

(56) References cited:
- WO-A1-2013/025135
- CA-A1- 2 071 627
- CA-A1- 2 071 627
- DE-A1- 2 010 882
- DE-A1- 19 727 872
- FR-A1- 2 658 982
- KR-B1- 101 317 832
- US-A- 2 654 986
- US-A- 2 837 887
- US-A- 3 214 896
- US-A- 3 214 896
- US-A- 3 465 508
- US-A- 5 163 276
- US-A- 5 163 276
- US-A- 5 402 629
- US-A1- 2006 048 492

## Description

### TECHNICAL FIELD

The present invention relates to a cutting blade for a mower. More particularly, the present invention relates to a cutting blade for a robotic mower.

### BACKGROUND

Robotic mowers, used for garden or lawn maintenance, are well known in the art. Typically, a robotic mower includes multiple cutting blades detachably connected to a blade holder. The blade holder is arranged to rotate about a vertical axis and is powered by a prime mower of the robotic mower to rotate the cutting blades.

Generally, during a cutting operation, a cutting edge of the cutting blades may strike any object other than vegetation, such as, sticks, stones, toys etc. Thus, the cutting edge may become blunt and consequently, the cutting blades need to be replaced frequently.

From US 2006/0048492 a cutting blade according to the preamble of claim 1 is known.

In light of the foregoing, there is a need for a cutting blade which has an increased operating life.

### SUMMARY

In view of the above, it is an objective to solve or at least reduce the problems discussed above. In particular, an objective is to provide an improved cutting blade for a robotic mower.

The objective is achieved with a novel cutting blade according to claim 1. The cutting blade for a robotic mower includes a first end section and a second end section, and two lateral sections extending between the first and second end sections. Further, at least one of the two lateral sections includes at least one cutting portion configured to cut vegetation and at least one protective portion configured to protect the at least one cutting portion. During a cutting operation, the cutting blade may strike against objects, such as, sticks, stones, toys etc. In such case, only the at least one protective portion contacts objects and safeguards the at least one cutting portion. Thus, at least one cutting portions may continue to cut vegetation normally without getting blunt by repeated contacts against objects. Therefore, an operating life of the cutting blade is substantially increased. Thus, periods between replacements of the cutting blades are also increased.

According to claim 2, the at least one lateral section includes at least one inclined edge. At least a portion of the at least one inclined edge is inclined relative to a longitudinal axis of the cutting blade. Moreover, the at least one inclined edge includes the at least one cutting portion and the at least one protective portion. Further, according to claim 3, the at least one cutting portion is located adjacent a proximate end of the at least one inclined edge, and the at least one protective portion is located adjacent a distal end of the at least one inclined edge. Moreover, according to claim 4, the at least one lateral section includes at least one first inclined edge and at least one second inclined edge connected to each other at their distal ends. According to claim 5, the at least one lateral section includes multiple first inclined edges and second inclined edges arranged alternatively. Such a configuration ensures that only the protective portions contact objects during a cutting operation, thereby safeguarding the cutting portions.

According to claim 6, the at least one lateral section further includes an intermediate portion connecting the at least one inclined edge to the first end section. Further, according to claim 7, the intermediate portion is inclined relative to the longitudinal axis of the cutting blade.

According to claim 8, the at least one inclined edge is straight, curvilinear, or polygonal.

According to the claim 9, both the lateral sections include the at least one cutting portion and the at least one protective portion.

According to the claim 10, the cutting blade is symmetric about the longitudinal axis. Alternatively, according to claim 11, the cutting blade is asymmetric about the longitudinal axis.

According to claim 12, the cutting blade further includes a gripping member enclosing at least partly the two lateral sections. Further, according to claim 13, the gripping member is made of rubber.

According to claim 14, wherein at least one cutting blade is detachably attached to a blade holder of the robotic mower proximate the first end section, the blade holder being configured to be rotatably driven. Further, according to claim 15, the cutting blade further comprises an aperture proximate the first end section, the cutting blade being detachably attached to the blade holder via a fastening member passing through the aperture.

### BRIEF DESCRIPTION OF THE DRAWINGS

The invention will be described in more detail with reference to the enclosed drawings, wherein:
FIG. **1** illustrates a bottom view of a robotic mower, according to an embodiment of the present invention;
FIG. **2** illustrates an exploded view of a cutting unit, according to an embodiment of the present invention;
FIG. **3** illustrates a top view of a cutting blade, according to an embodiment of the present invention;
FIG. **4** illustrates a detailed view of inclined edges of the cutting blade, according to the embodiment of FIG. **3**;
FIG. **5** illustrates a top view of the cutting blade with a gripping member, according to an embodiment of present invention;
FIG. **6** illustrates a top view of the cutting blade, according to another embodiment of present invention;
FIG. **7** illustrates a top view of the cutting blade, according to yet another embodiment of present invention; and
FIG. **8** illustrates a top view of the cutting blade, according to a further embodiment of present invention.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those ordinarily skilled in the art. For example, one or more aspects of the present invention can be utilized in other embodiments and even other types of devices. In the drawings, like numbers refer to like elements.

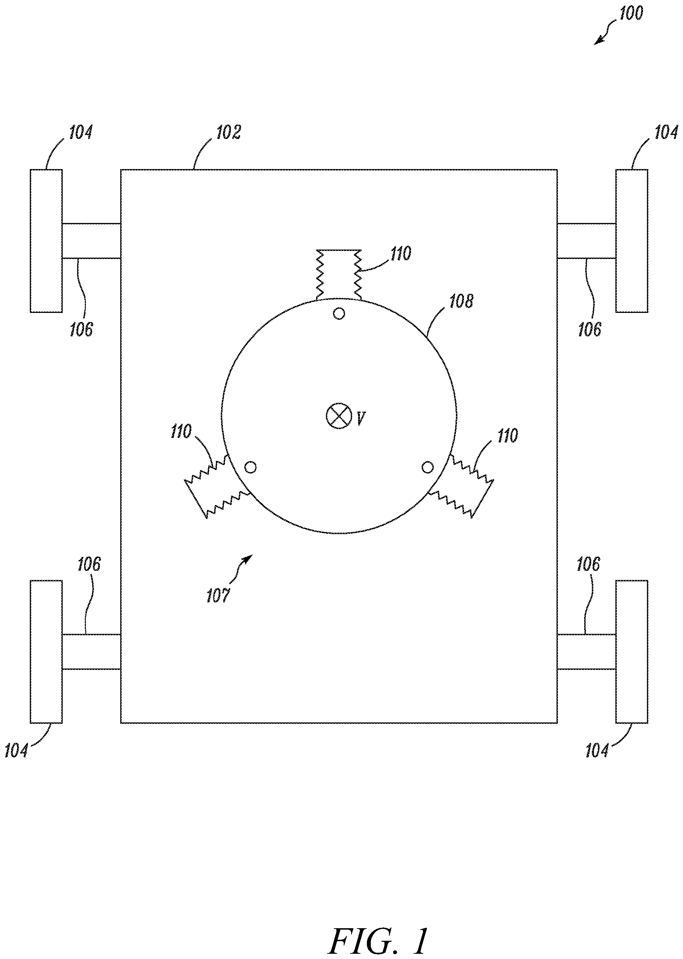

FIG. **1** illustrates a bottom view of a robotic mower **100**, according to an embodiment of the present invention. The robotic mower **100** may be powered by a prime mover (not shown) for example, an electric motor, an engine, or the like.

As illustrated in FIG. **1**, the robotic mower **100** includes a body **102** and ground engaging wheels **104** attached to the body **102** via axles **106**. In various embodiments of the present invention, two or more wheels **104** may be driven. The robotic mower **100** may be steered by varying the power provided to each of the driven wheels. Further, at least two caster wheels may be provided instead of two of the wheels **104**. In various embodiments, the robotic mower **100** may also include a battery for powering the prime mover, a control unit and a keypad. The robotic mower **100** may periodically charge the battery automatically at a charging station. The control unit may include programmable instructions for controlling all activities of the robotic mower **100**, for example, but not limited to, cutting algorithm, periodic charging etc. The control unit may also wirelessly communicate with other devices (E.g., a PC or a mobile phone). A user may be provided with regular updates on the status of the robotic mower **100**. The keypad may be used to enter various parameters. In an embodiment, a working area (E.g., a garden, lawn etc.) of the robotic mower **100** may be delimited by a boundary wire which emits a signal. The robotic mower **100** may include various sensors to detect the signal and the control unit regulates the robotic mower **100** accordingly. The robotic mower **100** may also include obstacle detection sensors.

As illustrated in FIG. **1**, a cutting unit **107** is provided on bottom side of the body **102**. The cutting unit **107** includes a blade holder **108** which is configured to rotate about an axis of rotation **V**. The blade holder **108** may be driven by the prime mover. In an embodiment, the blade holder **108** may be directly mounted on an output shaft of the prime mover. Alternatively, the blade holder **108** may be driven by the prime mover via a transmission assembly. The transmission assembly may include a clutch and brake. As illustrated in FIG. **1**, the blade holder **108** is a rotating disc. However, the blade holder **108** may be any other shape within the scope of the present invention. Further, at least one cutting blade **110** is attached to the blade holder **108**. Thus, during an operation of the robotic mower **100**, the cutting blade **110** rotates along with the blade holder **108** to cut vegetation, such as, grass. In the exemplary embodiment, as illustrated in FIG. **1**, the cutting unit **107** includes three cutting blades **110** which are connected to the blade holder **108**. However, there may be any number of cutting blades **110** attached to the blade holder **108** within the scope of the present invention. Further, the cutting blades **110** may be attached to the blade holder **108** such that an angle of 120 degrees exists between each cutting blade **110**. Such an arrangement balances the forces acting on the blade holder **110**. In various embodiment of the present invention, a height of the blade holder **108** and/or each wheel **104** relative to the ground may be adjustable, thereby enabling modification in a cutting height of each cutting blade **110**.

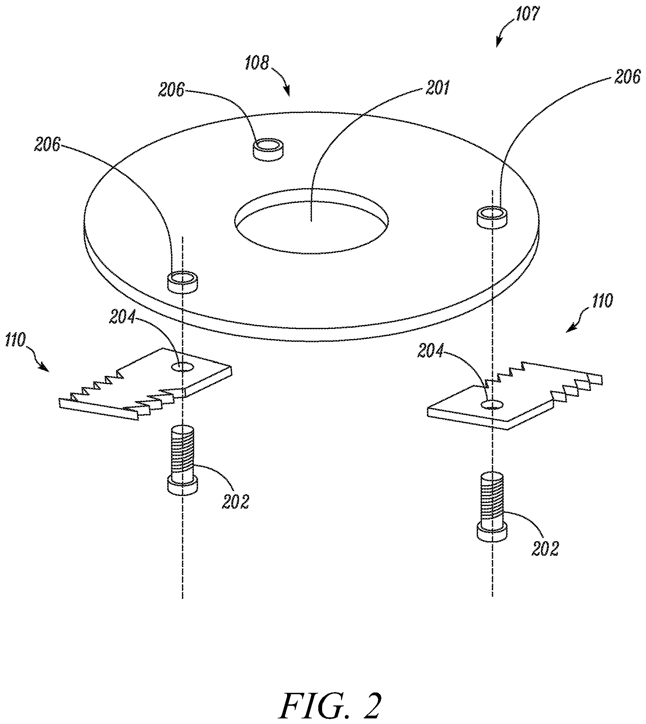

FIG. **2** illustrates the cutting unit **107**, according to an embodiment of the present invention. Only two cutting blades **110** are illustrated for clarity. As illustrated in FIG. 2, the blade holder **108** includes a coupling aperture **201** for connection with the output shaft of the prime mover or the transmission assembly. Further, the cutting blade **110** is detachably connected to the blade holder **108** via at least one fastening member **202**. The fastening member **202** may be a threaded bolt. The fastening member **202** is inserted into an aperture **204** of the cutting blade. Moreover, the blade holder **108** includes receiving members **206** configured to accept the corresponding fastening member **202**. Each receiving member **206** may include internal threads which couple with the threads of the fastening member **202**. The configuration of the cutting unit **107**, as illustrated in FIG. **2**, is purely exemplary in nature and alternate configurations are possible without deviating from the scope of the present invention. For example, the cutting blade **110** may be attached to the blade holder **108** via multiple fastening members. The cutting blade **110** may be attached to the blade holder **108** via a nut and a bolt assembly (not shown). Alternately, the cutting blade **100** may be attached to the blade holder **108** via a quick coupling. The cutting blade **110** may also be connected to the blade holder **108** by any other means, for example, welding, brazing, adhesives, or the like. Alternatively, the cutting blades **110** and the blade holder **108** may be fabricated as a unitary structure.

In various embodiments, cutting blade **110** may also be pivotally connected to the blade holder **108**. In such a case, the cutting blade **110** may be normally biased by at least one resilient member (E.g., a spring) in a retracted position. However, when the blade holder **108** rotates above a pre-determined speed, a centrifugal force may overcome the biasing force of the resilient member and the cutting blade **110** pivots to a cutting position. Further, if the cutting blade **110** encounters any obstruction (E.g., a wall, a tree, a rock, or the like) the cutting blade **110** automatically pivots to the retracted position. This may substantially reduce damage to the cutting blade **110**. Moreover, overloading of the transmission assembly and/or the prime mover may also be prevented.

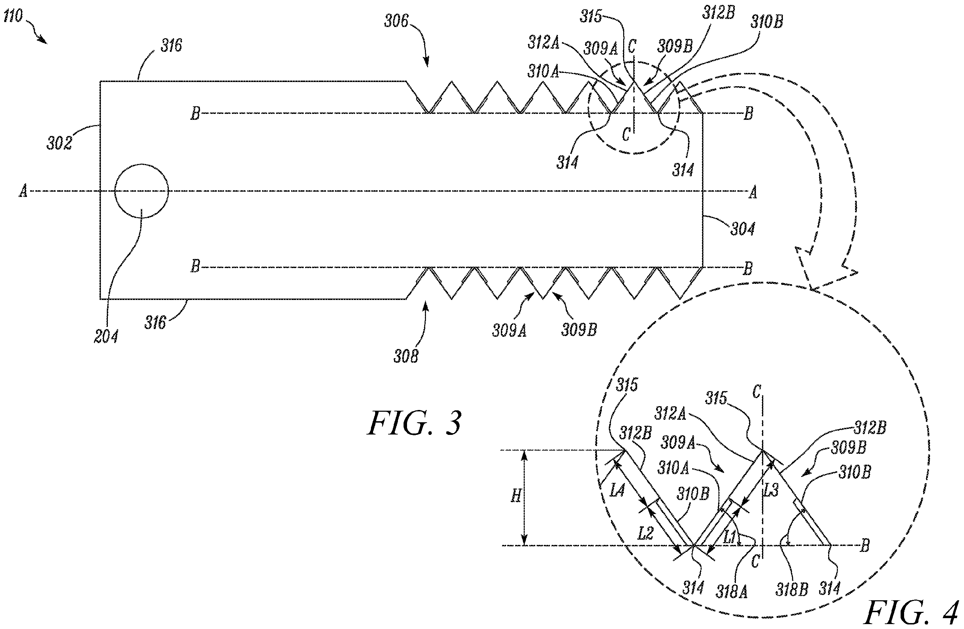

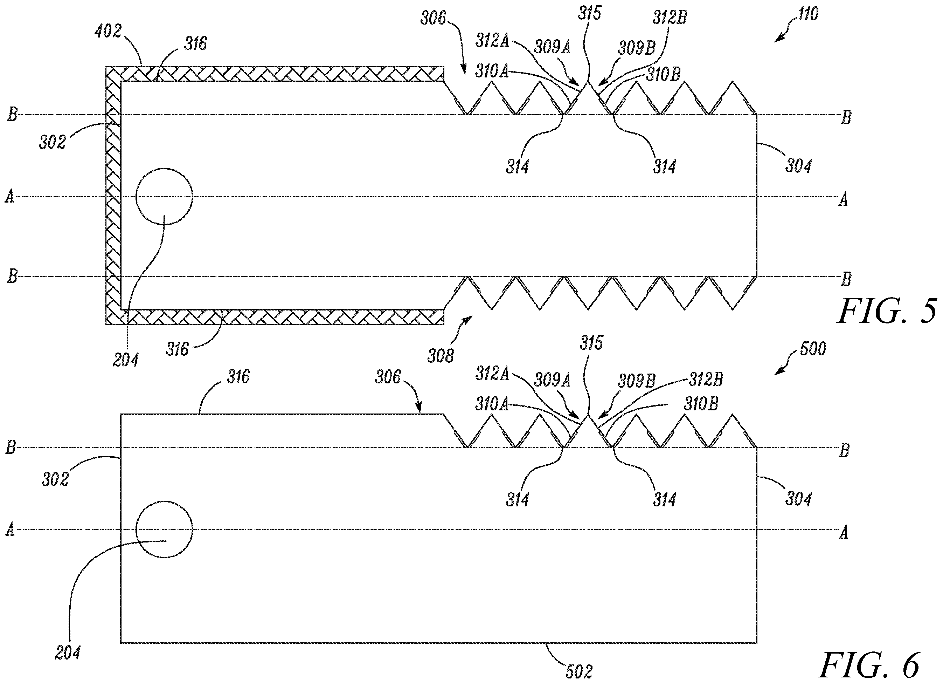

FIGS. **3** and **4** illustrate the cutting blade **110**, according to an embodiment of the present invention. In various embodiments, the cutting blade **110** may be made of a metal, a composite, plastic or the like. The cutting blade **110** includes a first end section **302**, a second end section **304**, and two lateral sections **306** and **308** extending between the first end section **302** and the second end section **304**. The aperture **204** is located proximate the first end section **302**. The cutting blade **110** is symmetric about a longitudinal axis A. However, the cutting blade **110** may also be asymmetric (described in conjunction with FIG. 6).

Further, each of the lateral sections **306**, **308** include multiple first and second inclined edges **309A**, **309B** arranged alternatively. Further, each of the first and second inclined edges **309A** and **309B** extends from a proximal end **314** on a base line **B** which is parallel to the longitudinal axis **A** of the cutting blade **110**. Moreover, each of the first and second included edges **309A** and **309B** intersect each other at a distal end **315**. Each first inclined edge **309A** includes a cutting portion **310A** and a protective portion **312A** arranged adjacent to one another. The cutting portion **310A** is adjacent to the base line **B** and originates from the proximal end **314**. The protective portion **312A** is adjacent to and ends at the distal end **315**. Similarly, each second inclined edge **309B** includes a cutting portion **310B** and a protective portion **312B** arranged adjacent to one another. The cutting portion **310B** is adjacent to the base line **B** and originates from the proximal end **314**. The protective portion **312B** is adjacent to and ends at the distal end **315**. Intermediate portions **316** connect the first end section **302** to the nearest proximal ends **314** on the respective lateral sections **306**, **308**. Each first inclined edge **309A** is inclined at a first angle **318A** relative to the longitudinal axis **A** (the first angle **318A** is shown between the first inclined edge **309A** and the base line **B** which is parallel to the longitudinal axis **A**) of the cutting blade **110**. Further, each second inclined edge **309B** is inclined at a second angle **318B** relative to the longitudinal axis **A** (the second angle **318B** is shown between the second inclined edge **309B** and the base line **B**) of the cutting blade **110**. In an embodiment, the first angle **318A** and the second angle **318B** are substantially equal such that each of the first and second inclined edges **309A** and **309B** form a symmetric triangular structure about a central axis **C**. In an embodiment, the first angle **318A** and the second angle **318B** lie in a range from about 10 degrees to 60 degrees. In an alternate embodiment, the first angle **318A** and the second angle **318B** may not be equal, and each of the first and second inclined edges **309A** and **309B** form a non-symmetric structure about the central axis **C**. In an embodiment, a height **H** of the distal end **315** from the base line **B** lies in a range from about 0.5 mm to 10 mm. The first and second inclined edges **309A** and **309B** are embodied as straight edges. However, in various other embodiments, each of the first inclined edges **309A** and/or the second inclined edges **309B** may be curvilinear, or polygonal. In such cases, the first and second angles **318A**, **318B** may be the angles between the tangents of the first and/or second inclined edges **309A**, **309B**, respectively, at their proximal ends **314** and the longitudinal axis **A**. The first angle **318A** and the second angle **318B** may also change for different first and second inclined edges **309A**, **309B**.

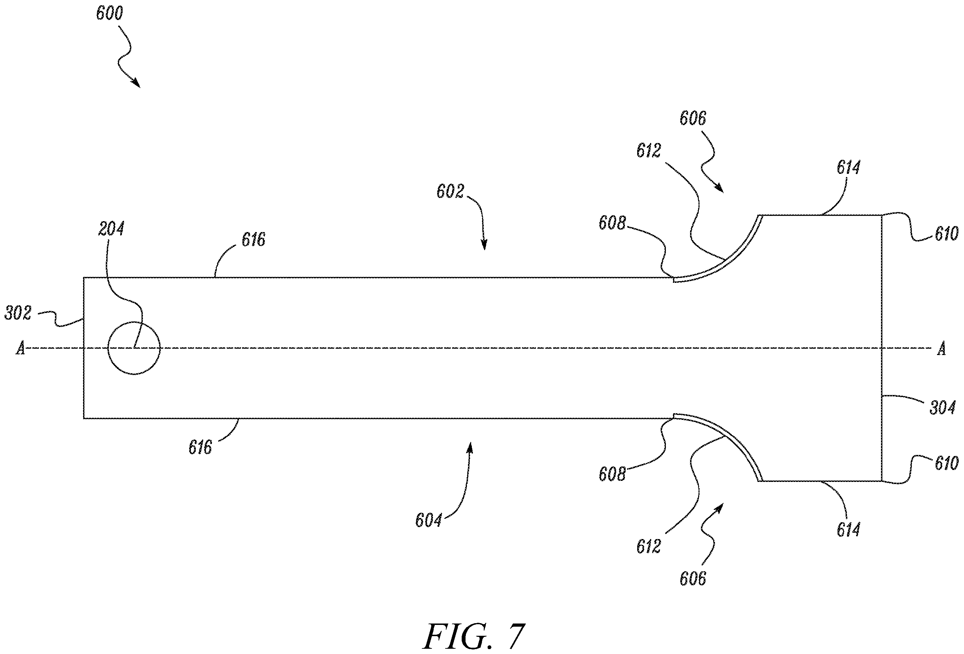

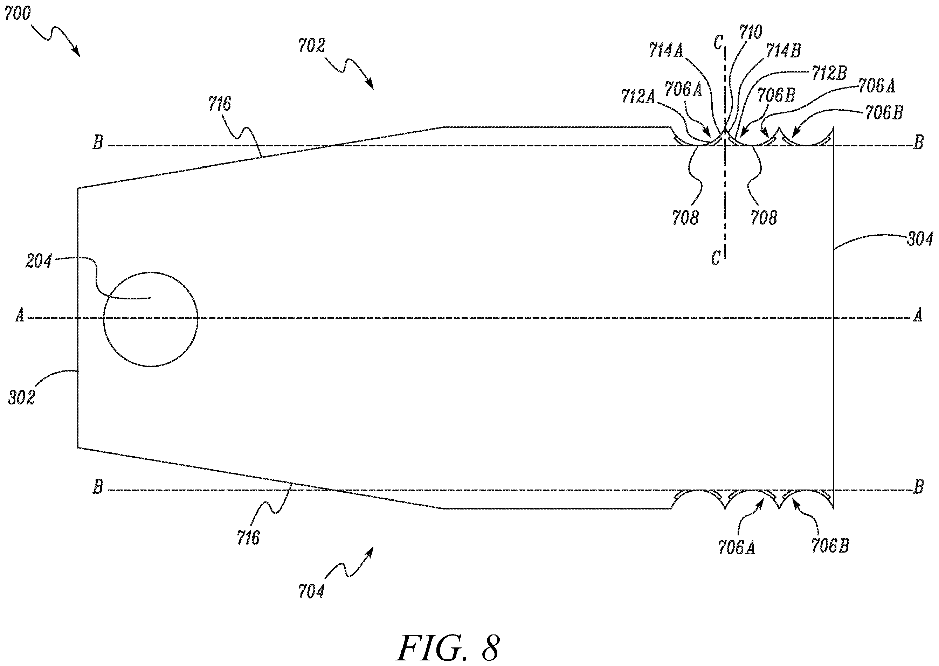

The cutting portions **310A** and **310B** are configured to cut vegetation, such as, grass. The cutting portions **310A** and **310B** are therefore sharpened edges. The cutting portions **310A** and **310B** are embodied as straight edges. However, the cutting portions **310A** and **310B** may be curvilinear (shown in FIGS. **7** and **8**) or polygonal in shape within the scope of the present invention. In an embodiment, lengths **L1** and **L2** of each of the cutting portions **310A** and **310B**, respectively, lie in a range from about 0.5 mm to 20 mm depending on **H**. The lengths **L1** and **L2** may be substantially equal.

As illustrated in FIGS. **3** and **4**, each of the protective portions **312A** and **312B** are embodied as straight edges. Thus, the protective portions **312A** and **312B** form a triangular region around the distal end **315**. However, each of the protective portions **312A** and **312B** may be curvilinear (shown in FIG. **8**) or polygonal in shape within the scope of the present invention. Each protective portion **312A** or **312B** is configured to protect the adjacent cutting portion **310A** or **310B**. In an embodiment, lengths **L3** and **L4** of the protective portion **312A** and **312B**, respectively, lie in a range from about 0 mm to 10 mm. The lengths **L3** and **L4** may be substantially equal. During a cutting portion, the cutting blade **110** may strike against objects other than vegetation, such as, sticks, stones, toys etc. In such case, only the protective portions **312A** and **312B** contact the objects and safeguard the cutting portions **310A** and **310B**, respectively. Thus, the cutting portions **310A** and **310B** may continue to cut vegetation normally without getting blunt by repeated contacts against objects. Therefore, an operating life of the cutting blade **110** is substantially increased. Thus, periods between replacements of the cutting blades **110** are also increased. In an embodiment, the lateral sections **306** and **308** are alternately used for cutting vegetation by changing the rotational direction of the blade holder **108** periodically. This further increases an operating life of the cutting blade **110**.

In an embodiment of the present invention, the protective portions **312A** and **312B** may be manufactured as sharpened edges along with the cutting portions **310A** and **310B**. However, during operation, only the protective portions **312A** and **312B** may strike against objects and become blunt, thereby protecting the cutting portions **310A** and **310B**.

The cutting blade **110**, as illustrated in FIGS. **3** and **4**, is exemplary in nature, and the cutting blade **110** may be of any alternate configuration within the scope of the present invention. For example, the base lines **B** of the lateral sections **306**, **308** may be curvilinear (For example, concave or convex) or polygonal in shape. Alternatively, the base lines **B** may be tapered inwards or outwards relative to the longitudinal axis **A**. Further, the first and/or second end sections **302**, **304** may also be curvilinear or polygonal. Moreover, another set of intermediate sections may be provided between the second end section **304** and the nearest first or second inclined edges **309A**, **309B**. In various alternate embodiments, the cutting portions **310A** and **310B** may not originate directly from the proximal ends **314** but start at a distance from the proximal ends **314**.

FIG. **5** illustrates the cutting blade **110** with a gripping member **402** enclosing the first end section **302** and the intermediate portions **315** of the lateral sections **306**, **308**. In an embodiment, the gripping member **402** may be made of rubber. The gripping member **402** may facilitate manual gripping of the cutting blade **110**. The gripping member **402** may also protect a user from the cutting portions **310A**, **310B** during manual handling of the cutting blade **110**.

FIG. **6** illustrates the cutting blade **500**, according to another embodiment of the present invention. As illustrated in FIG. **5**, only the lateral section **306** includes the first and second inclined edges **309A** and **309B**, whereas a lateral section **502** is embodied as a straight edge. Therefore, the cutting blade **500** is asymmetric about the longitudinal axis **A**. In various embodiments, the lateral section **502** may include a sharpened portion configured to cut vegetation. The lateral section **502** may also be curvilinear, tapered, or polygonal within the scope of the present invention.

FIG. **7** illustrates a cutting blade **600**, according to yet another embodiment of the present invention. As illustrated in FIG. 7, each of lateral sections **602** and **604** includes a single inclined edge **606**. The inclined edge **606** extends from a proximal end **608** and intersects the second end section **304** at a distal end **610**. Further, the inclined edge **606** includes a cutting portion **612** and a protective portion **614** adjacent to the cutting portion **612**. The cutting portion **612** originates from the proximal end **608**, while the protective portion **614** terminates at the distal end **610**. Further, intermediate portions **616** are substantially parallel to the longitudinal axis **A**. In alternate configurations, the intermediate portions **616** may be also inclined to the longitudinal axis **A**.

As illustrated in FIG. **7**, the cutting portion **612** is inclined relative to the longitudinal axis **A** of the cutting blade **600**. Further, the cutting portion **612** is curvilinear. In various embodiments, the cutting portion **612** may be substantially circular, elliptical, parabolic, hyperbolic or the like. Further, the protective portion **614** is straight and substantially parallel to the longitudinal axis **A**.

FIG. **8** illustrates a cutting blade **700**, according to an embodiment of the present invention. As illustrated in **FIG. 8**, the cutting blade **700** includes two lateral sections **702** and **704** extending between the first end section **302** and the second end section **304**. Each of the lateral sections **702**, **704** include multiple first and second inclined edges **706A**, **706B** arranged alternatively. Further, each of the first and second inclined edges **706A** and **706B** extends from a proximal end **708** on the base line **B** which is parallel to the longitudinal axis **A** of the cutting blade **700**. Moreover, each of the first and second included edges **706A** and **706B** intersect each other at a distal end **710**. Further, each of the first and second inclined edges **706A**, **706B** is curvilinear. In various embodiments, each of the first and second inclined edges **706A**, **706B** may be substantially circular, elliptical, parabolic, hyperbolic or the like. In an embodiment, the first and second inclined edges **706A**, **706B** may form a symmetric structure about the central axis C.

As illustrated in FIG. **8**, each first inclined edge **706A** includes a cutting portion **712A** and a protective portion **714A** arranged adjacent to one another. The cutting portion **712A** is adjacent to the base line **B** and originates from the proximal end **708**. The protective portion **714A** is adjacent to and ends at the distal end **710**. Similarly, each second inclined edge **706B** includes a cutting portion **712B** and a protective portion **714B** arranged adjacent to one another. The cutting portion **712B** is adjacent to the base line **B** and originates from the proximal end **708**. The protective portion **714B** is adjacent to and ends at the distal end **710**. Intermediate portions **716** connect the first end section **302** to the nearest proximal ends **708** on the respective lateral sections **702**, **704**. Each of the intermediate portions **716** is inclined to the longitudinal axis **A**. However, in alternate embodiments, the intermediate portions **716** may be substantially parallel to the longitudinal axis **A**.

In the drawings and specification, there have been disclosed preferred embodiments and examples of the invention and, although specific terms are employed, they are used in a generic and descriptive sense only and not for the purpose of limitation, the scope of the invention being set forth in the following claims.

## Claims

1. A cutting blade (**110**, **500**, **600**, **700**) for a robotic mower (**100**), the cutting blade comprising:
a first end section (**302**) and a second end section (**304**), wherein the cutting blade is detachably attachable to a blade holder (**108**) of the robotic mower proximate the first end section (302), and
two lateral sections (**306**, **308**, **502**, **602**, **604**, **702**, **704**) extending between the first and second end sections,
**characterized in that**,
at least one of the two lateral sections comprises at least one cutting portion (**310A**, **310B**, **612**, **712A**, **712B**) configured as a sharpened edge to cut vegetation and at least one protective portion (**312A**, **312B**, **614**, **714A**, **714B**) configured to protect the at least one cutting portion, the protective portion (**312A**, **312B**, **614**, **714A**, **714B**) being arranged such that, during a cutting operation, only the at least one protective portion (**312A**, **312B**, **614**, **714A**, **714B**) strikes against objects other than vegetation to be cut, such as sticks, stones and toys, to protect the at least one cutting portion.

2. The cutting blade according to claims 1, wherein the at least one lateral section comprises at least one inclined edge (**309A**, **309B**, **606**, **706A**, **706B**), wherein at least a portion of the at least one inclined edge is inclined relative to a longitudinal axis (**A**) of the cutting blade, and wherein the at least one inclined edge comprises the at least one cutting portion and the at least one protective portion.

3. The cutting blade according to claim 2, wherein the at least one cutting portion is located adjacent a proximate end (**314**, **608**) of the at least one inclined edge, and the at least one protective portion is located adjacent a distal end (**315**, **610**) of the at least one inclined edge.

4. The cutting blade (**110**, **500**) according to claim 3, wherein the at least one lateral section (**306**, **308**) comprises at least one first inclined edge (**309A**) and at least one second inclined edge (**309B**) connected to each other at their distal ends (**315**).

5. The cutting blade according to claim 4, wherein the at least one lateral section comprises multiple first inclined edges and second inclined edges arranged alternatively.

6. The cutting blade according to claims 2-5, wherein the at least one lateral section further comprises an intermediate portion (**316**, **616**, **716**) connecting the at least one inclined edge to the first end section.

7. The cutting blade (**600**) according to claim 6, wherein the intermediate portion (**716**) is inclined relative to the longitudinal axis of the cutting blade.

8. The cutting blade according to claims 2-7, wherein the at least one inclined edge is straight (**309A, 309B**), curvilinear (**606**, **706A**, **706B**), or polygonal.

9. The cutting blade (**110**) according to the preceding claims, wherein both the lateral sections (**306**, **308**) comprise the at least one cutting portion and the at least one protective portion.

10. The cutting blade (**110**, **600**, **700**) according to the preceding claims is symmetric about the longitudinal axis.

11. The cutting blade (**500**) according to the claims 1-9 is asymmetric about the longitudinal axis.

12. The cutting blade (**110**) according to the preceding claims further comprises a gripping member (**402**) enclosing at least partly the two lateral sections.

13. The cutting blade according to claim 12, wherein the gripping member is made of rubber.

14. A robotic lawnmower comprising the cutting blade according to the preceding claims detachably attached to a blade holder (**108**) of the robotic mower proximate the first end section, the blade holder being configured to be rotatably driven.

15. The robotic lawnmower according to claim 14, wherein the cutting blade further comprises an aperture (**204**) proximate the first end section, the cutting blade being detachably attached to the blade holder via a fastening member (**202**) passing through the aperture.

## Patentansprüche

1. Schneidklinge (110, 500, 600, 700) für einen Mähroboter (100), wobei die Schneidklinge umfasst:
eine erste Endsektion (302) und eine zweite Endsektion (304), wobei die Schneidklinge lösbar an einem Klingenhalter (108) des Mähroboters proximal zu der ersten Endsektion (302) angebracht werden kann, und
zwei seitliche Sektionen (306, 308, 502, 602, 604, 702, 704), die sich zwischen der ersten und zweiten Endsektion erstrecken,
**dadurch gekennzeichnet, dass**,
zumindest eine der zwei seitlichen Sektionen zumindest einen Schneidabschnitt (310A, 310B, 612, 712A, 712B), der als ein geschärfter Rand zum Schneiden von Vegetation ausgestaltet ist, und zumindest einen Schutzabschnitt (312A, 312B, 614, 714A, 714B) umfasst, der dazu ausgestaltet ist, den zuminest einen Schneidabschnitt zu schützen, wobei der Schutzabschnitt (312A, 312B, 614, 714A, 714B) so angeordnet ist, dass während eines Schnittvorgangs nur der zumindest eine Schutzabschnitt (312A, 312B, 614, 714A, 714B) auf andere Objekte trifft als die Vegetation, die geschnitten werden soll, wie etwa Stangen, Steine und Spielzeug, um den zumindest einen Schneidabschnitt zu schützen.

2. Schneidklinge nach Anspruch 1, wobei die zumindest eine seitliche Sektion zumindest einen abgeschrägten Rand (309A, 309B, 606, 706A, 706B) aufweist, wobei zumindest ein Abschnitt des zumindest einen abgeschrägten Rands relativ zu einer Längsachse (A) der Schneidklinge abgeschrägt ist, und wobei der zumindest eine abgeschrägte Rand den zumindest einen Schneidabschnitt und den zumindest einen Schutzabschnitt umfasst.

3. Schneidklinge nach Anspruch 2, wobei der zumindest eine Schneidabschnitt sich benachbart zu einem proximalen Ende (314, 608) des zumindest einen abgeschrägten Rands befindet, und der zumindest eine Schutzabschnitt sich benachbart zu einem distalen Ende (315, 610) des zumindest einen abgeschrägten Rands befindet.

4. Schneidklinge (110, 500) nach Anspruch 3, wobei die zumindest eine seitliche Sektion (306, 308) zumindest einen ersten abgeschrägten Rand (309A) und zumindest einen zweiten abgeschrägten Rand (309B) umfasst, die miteinander an ihren distalen Enden (315) verbunden sind.

5. Schneidklinge nach Anspruch 4, wobei die zumindest eine seitliche Sektion mehrere erste abgeschrägte Ränder und zweite abgeschrägte Ränder umfasst, die abwechselnd angeordnet sind.

6. Schneidklinge nach den Ansprüchen 2-5, wobei die zumindest eine seitliche Sektion ferner einen Zwischenabschnitt (316, 616, 716) umfasst, der den zumindest einen abgeschrägten Rand mit der ersten Endsektion verbindet.

7. Schneidklinge (600) nach Anspruch 6, wobei der Zwischenabschnitt (716) relativ zu der Längsachse der Schneidklinge abgeschrägt ist.

8. Schneidklinge nach den Ansprüchen 2-7, wobei der zumindest eine abgeschrägte Rand gerade (309A, 309B), gekrümmt (606, 706A, 706B) oder vieleckig ist.

9. Schneidklinge (110) nach den vorhergehenden Ansprüchen, wobei beide seitlichen Sektionen (306, 308) den zumindest einen Schneidabschnitt und den zumindest einen Schutzabschnitt umfassen.

10. Schneidklinge (110, 600, 700) nach den vorhergehenden Ansprüchen, die um die Längsachse symmetrisch ist.

11. Schneidklinge (500) nach den Ansprüchen 1-9, die um die Längsachse asymmetrisch ist.

12. Schneidklinge (110) nach den vorhergehenden Ansprüchen, ferner umfassend ein Griffelement (402), das die zwei seitlichen Sektionen zumindest zum Teil umschließt.

13. Schneidklinge nach Anspruch 12, wobei das Griffelement aus Gummi hergestellt ist.

14. Rasenmähroboter umfassend die Schneidklinge nach den vorhergehenden Ansprüchen, die lösbar an einem Klingenhalter (108) des Mähroboters proximal zu der ersten Endsektion angebracht ist, wobei der Klingenhalter dazu ausgestaltet ist, drehbar angetrieben zu werden.

15. Rasenmähroboter nach Anspruch 14, wobei die Schneidklinge ferner eine Öffnung (204) proximal zu der ersten Endsektion umfasst, wobei die Schneidklinge lösbar über ein Befestigungselement (202), das durch die Öffnung läuft, an dem Klingenhalter angebracht ist.

## Revendications

1. Lame de coupe (110, 500, 600, 700) pour une tondeuse robotisée (100), la lame de coupe comprenant :
une première section d'extrémité (302) et une deuxième section d'extrémité (304), où la lame de coupe peut être fixée de manière amovible à un porte-lame (108) de la tondeuse robotisée à proximité de la première section d'extrémité (302), et
deux sections latérales (306, 308, 502, 602, 604, 702, 704) s'étendant entre les première et deuxième sections d'extrémité,
**caractérisée en ce que**,
au moins l'une des deux sections latérales comprend au moins une partie de coupe (310A, 310B, 612, 712A, 712B) configurée en tant que bord aiguisé pour couper la végétation et au moins une partie de protection (312A, 312B, 614, 714A, 714B) configurée pour protéger l'au moins une partie de coupe, la partie de protection (312A, 312B, 614, 714A, 714B) étant agencée de sorte que, au cours d'une opération de coupe, seule l'au moins une partie de protection (312A, 312B, 614, 714A, 714B) frappe contre des objets autres que la végétation à couper, tels que des bâtons, des pierres et des jouets, pour protéger l'au moins une partie de coupe.

2. Lame de coupe selon la revendication 1, dans laquelle l'au moins une section latérale comprend au moins un bord incliné (309A, 309B, 606, 706A, 706B), où au moins une partie de l'au moins un bord incliné est inclinée par rapport à un axe longitudinal (A) de la lame de coupe, et où l'au moins un bord incliné comprend l'au moins une partie de coupe et l'au moins une partie de protection.

3. Lame de coupe selon la revendication 2, dans laquelle l'au moins une partie de coupe est située à côté d'une extrémité proximale (314, 608) de l'au moins un bord incliné, et l'au moins une partie de protection est située à côté d'une extrémité distale (315, 610) de l'au moins un bord incliné.

4. Lame de coupe (110, 500) selon la revendication 3, dans laquelle l'au moins une section latérale (306, 308) comprend au moins un premier bord incliné (309A) et au moins un deuxième bord incliné (309B) reliés entre eux au niveau de leurs extrémités distales (315).

5. Lame de coupe selon la revendication 4, dans laquelle l'au moins une section latérale comprend plusieurs premiers bords inclinés et deuxièmes bords inclinés agencés en alternance.

6. Lame de coupe selon les revendications 2 à 5, dans laquelle l'au moins une section latérale comprend en outre une partie intermédiaire (316, 616, 716) reliant l'au moins un bord incliné à la première section d'extrémité.

7. Lame de coupe (600) selon la revendication 6, dans laquelle la partie intermédiaire (716) est inclinée par rapport à l'axe longitudinal de la lame de coupe.

8. Lame de coupe selon les revendications 2 à 7, dans laquelle l'au moins un bord incliné est droit (309A, 309B), curviligne (606, 706A, 706B) ou polygonal.

9. Lame de coupe (110) selon les revendications précédentes, dans laquelle les deux sections latérales (306, 308) comprennent l'au moins une partie de coupe et l'au moins une partie de protection.

10. Lame de coupe (110, 600, 700) selon les revendications précédentes est symétrique autour de l'axe longitudinal.

11. Lame de coupe (500) selon les revendications 1 à 9 est asymétrique autour de l'axe longitudinal.

12. Lame de coupe (110) selon les revendications précédentes comprend en outre un élément de préhension (402) enfermant au moins en partie les deux sections latérales.

13. Lame de coupe selon la revendication 12, dans laquelle l'élément de préhension est en caoutchouc.

14. Tondeuse à gazon robotisée comprenant la lame de coupe selon les revendications précédentes fixée de manière amovible à un porte-lame (108) de la tondeuse robotisée à proximité de la première section d'extrémité, le porte-lame étant configuré pour être entraîné en rotation.

15. Tondeuse à gazon robotisée selon la revendication 14, dans laquelle la lame de coupe comprend en outre une ouverture (204) à proximité de la première section d'extrémité, la lame de coupe étant fixée de manière amovible au porte-lame par l'intermédiaire d'un élément de fixation (202) traversant l'ouverture.
